# EUROPEAN PATENT APPLICATION

(11) **EP 4 700 139 A1**
(43) Date of publication of application: **25.02.2026**
(21) Application number: 24860182.5
(22) Date of filing: 19.07.2024
(51) Int. Cl.: C22B 3/12, C22B 3/22, C22B 7/00, C22B 26/12, H01M 10/54

(54) **METHOD FOR REMOVING ALUMINUM FROM BLACK MASS DERIVED FROM WASTE BATTERIES**

(30) Priority: 31.08.2023 KR 20230115629; 18.07.2024 KR 20240094796
(71) Applicant: LG Chem, Ltd., Seoul 07336 (KR)
(72) Inventor: SEO, Kwang Seok, Daejeon 34122 (KR); KIM, Hyeon Hui, Daejeon 34122 (KR); CHUNG, Ui Seok, Daejeon 34122 (KR); CHOI, Hee Jung, Daejeon 34122 (KR)
(74) Representative: Plasseraud IP
(86) International application number: PCT/KR2024/010421
(87) International publication number: WO 2025/048261

(57) **Abstract**

Disclosed herein relates to a method for removing aluminum from black mass derived from deactivated batteries, wherein the aluminum removal method selectively removes aluminum (Al) by heat treating black mass derived from waste batteries together with a chlorine-based compound precursor, thereby enabling lithium (Li) to be obtained with high purity and recovery rate. Additionally, the aluminum removal method has the advantages of easy process control and high safety.

## Description

### [Technical Field]

The present disclosure relates to a method for selectively removing aluminum from black mass derived from deactivated lithium secondary batteries and/or positive electrode scrap.

This application claims the benefit of Korean Patent Application No. 10-2023-0115629, filed on August 31, 2023, and Korean Patent Application No. 10-2024-0094796, filed on July 18, 2024, the disclosures of which are incorporated herein by reference.

### [Background]

Lithium batteries, which are primarily used in automobiles, are structured with a positive electrode and a negative electrode separated by a separator, with an electrolyte filled between them. The most critical component of these lithium secondary batteries is lithium, which serves as the main component of the positive electrode material. Lithium is typically manufactured from lithium-containing ores, and due to the costs involved in the manufacturing process and the price of the raw material itself, it is traded at relatively high prices. Therefore, in order to reduce the manufacturing cost of lithium secondary batteries, research is being conducted not only on improving the performance of lithium secondary batteries themselves but also on methods to recover and reuse lithium components from spent lithium batteries.

To recover lithium from the positive electrode, the positive electrode must be disassembled and separated from the deactivated lithium battery to extract the lithium. However, the lithium contained in the positive electrode is poorly soluble in various organic solvents due to the organic materials (e.g., NMP, PVDF) contained in the organic binder, and it does not easily dissolve even when subjected to ultrasonic waves or filtration.

Therefore, a wet process has been applied to extract lithium from the positive electrode active material by dissolving the crushed waste battery material (e.g., black mass) containing the positive electrode active material in an acidic solvent and separating each metal. More specifically, the wet process involves discharging the used batteries, then grinding the batteries themselves or the positive electrodes separated from them. Following this, a roasting process is performed on the ground particles to vaporize/remove non-metal components, and the remaining material is immersed in an acidic solvent to extract lithium, thereby recovering it.

However, the wet process uses acidic solvents, resulting in high costs for treating the waste acidic solvents generated after the process is completed, as well as environmental pollution issues caused by byproducts. Additionally, in the aforementioned method, during the roasting process before acid treatment, lithium (Li) components contained in the positive electrode active material and aluminum (Al) components from the current collector aggregate, easily forming slag. The resulting slag is difficult to selectively separate lithium (Li) components due to the aluminum (Al) components contained within it, and even if separated, the recovery rate is significantly reduced due to impurities.

### [Prior art reference]

Korea Public Patent Gazette No. 10-2019-0082167

### [Summary]

### [Technical Problem]

Accordingly, the purpose of the present disclosure is to provide a technology for selectively removing aluminum (Al) from black mass when recovering lithium from deactivated waste batteries, thereby obtaining lithium (Li) with high purity and recovery rate.

### [Technical Solution]

In order to solve the above problems, the present disclosure, in one embodiment, provides
a method for removing aluminum from black mass derived from a deactivated battery, including:
forming a mixture comprising black mass and chlorine-based compound precursor (S1); and
heat treating the formed mixture to generate dealuminated black mass and aluminum chloride gas (S2),
wherein the heat treatment is performed at a temperature above the temperature at which the chlorine-based compound precursors vaporize or thermally decompose to generate chlorine-based compounds; and below 300°C.

Here, the chlorine-based compound precursors may include at least one of C₁₋₆ hydrocarbon compound in which at least one hydrogen atom is substituted by a chlorine atom, and polymer compound in which at least one hydrogen atom is substituted by a chlorine atom.

The above-mentioned hydrocarbon compound may include one or more among tetrachloromethane (CCl₄), chloroform (CHCl₃), dichloromethane (CH₂Cl₂), hexachloroethane (C₂Cl₆), tetrachloroethane (C₂H₂Cl₄), tetrachloroethylene (C₂Cl₄), and trichloroethylene (C₂HCl₃).

In addition, the polymer compound may include polyvinyl chloride (PVC).

In addition, the heat treatment may be performed in a reactor capable of maintaining the internal pressure that increases during heat treatment.

Moreover, the heat treatment may be performed at a pressure of more than 1 bar and 15 bar or less.

Additionally, the mixture may further include an aluminum-based catalyst including aluminum chloride (AlCl₃).

Furthermore, the average particle diameter of the black mass may be 0.5 µm to 1,000 µm.

In addition, the black mass may include aluminum in an amount of greater than 0.1 wt.% and 5 wt.% or less with respect to the total weight. In addition, the black mass may include aluminum in an amount of greater than 0.5 wt.% and 5 wt.% or less with respect to the total weight.

Moreover, the chlorine-based compound precursor may be mixed with the black mass such that the ratio of chlorine atoms in the chlorine-based compound precursor to aluminum atoms in the black mass (Cl/Al) is 3 to 100, and the heat treatment of the black mass and the chlorine-based compound precursor may be performed for 10 hours to 50 hours.

Meanwhile, the aluminum removal method may further include:
after generating dealuminated black mass and aluminum chloride gas (S2),
separating aluminum chloride gas from the dealuminated black mass (S3); and
condensing the separated aluminum chloride gas (S4).

Furthermore, the dealuminated black mass may have an aluminum element content of 3 wt.% or less with respect to the total weight.

### [Advantageous Effects]

The aluminum removal method according to the present disclosure enables selective removal of aluminum (Al) by heat treating black mass derived from waste batteries with chlorine-based compound precursors under predetermined temperature conditions, thereby allowing lithium (Li) to be obtained with high purity and recovery rate. Furthermore, the aluminum removal method has the advantages of easy process control and high safety.

### [Brief Description of the Drawings]

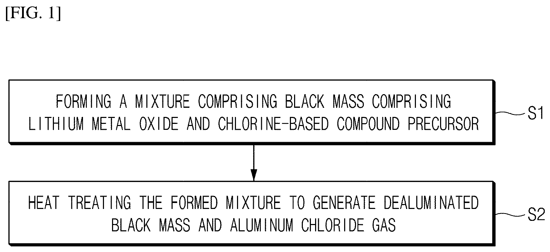

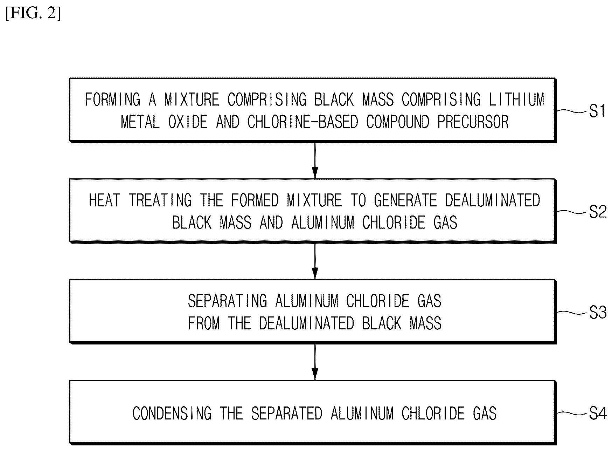

FIGS. 1 and 2 are flowcharts that schematically illustrate the aluminum removal method according to the present disclosure.

### [Best Mode for Carrying Out the Invention]

While the present disclosure may be variously changed and have various embodiments, specific embodiments will be described in detail below.

However, it is to be understood that the present disclosure is not limited to the specific embodiments described herein but includes all modifications, equivalents, and substitutions included in the spirit and the scope of the present disclosure.

In the present disclosure, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

In addition, in the present disclosure, when a portion such as a layer, a film, an area, a plate, and the like are referred to as being "on" another portion, this includes not only the case where the portion is "directly on" another portion but also the case where still another portion is interposed therebetween. On the other hand, when a portion such as a layer, a film, an area, a plate, and the like are referred to as being "under" another portion, this includes not only the case where the portion is "directly under" another portion but also the case where still another portion is interposed therebetween. In addition, to be disposed "on" in the present application may include the case of being disposed at the bottom as well as the top.

Additionally, in the present disclosure, "average particle diameter (D₅₀)" refers to the particle diameter at which the cumulative value of the particle diameter distribution is 50%, and this is also referred to as the median diameter. The average particle diameter may be measured using methods commonly applied in the industry. For example, the average particle diameter may be measured using an analyzer equipped with a laser diffraction particle size distribution measurement method in accordance with ISO 13320.

The present disclosure will now be described in more detail below.

In an exemplary embodiment, the present disclosure provides,
a method for removing aluminum from black mass derived from a deactivated battery, including:
forming a mixture comprising black mass and chlorine-based compound precursor (S1); and
heat treating the formed mixture to generate dealuminated black mass and aluminum chloride gas (S2),
wherein the heat treatment is performed at a temperature above the temperature at which the chlorine-based compound precursors vaporize or thermally decompose to generate chlorine-based compounds; and below 300°C.

The present disclosure relates to a method for selectively removing aluminum derived from the positive electrode current collector of a lithium waste battery when recovering lithium from a deactivated lithium waste battery.

The aluminum removal method can be performed by heat treating a mixture of lithium-containing material derived from the deactivated battery and a chlorine-based compound precursor. Specifically, the aluminum removal method can be performed by performing the following steps: forming a mixture including black mass derived from deactivated batteries and chlorine-based compound precursors (S1); and heat treating the formed mixture to generate dealuminated black mass and aluminum chloride gas (S2). The aluminum removal method involves heat treating black mass derived from waste batteries together with chlorine-based compound precursors to chlorinate the aluminum contained in the black mass. Here, the aluminum chloride (AlCl₃) generated during this process undergoes a phase change to a gaseous state at approximately 180°C, making it volatile under high-temperature conditions.

Therefore, the aluminum removal method according to the present disclosure can selectively remove aluminum from black mass by converting it into aluminum chloride (AlCl₃) and then volatilizing it. The dealuminated black mass produced in this manner has a significantly reduced aluminum (Al) content, enabling the recovery of lithium (Li) with high purity and recovery rates in the lithium recovery process.

FIGS. 1 and 2 are flowcharts schematically illustrating the process steps of the aluminum removal method according to the present disclosure. The following describes each step in more detail with reference to FIGS. 1 and 2.

First, the aluminum removal method of the present disclosure includes forming a mixture of black mass and a chlorine-based compound precursor (S1). This step (S1) refers to a process of mixing black mass derived from deactivated batteries with a chlorine-based compound precursor capable of providing chlorine-based compounds to the aluminum (Al) contained in the black mass.

Here, the black mass may be particles obtained by discharging a deactivated battery, i.e., a used battery, and crushing it, and may optionally include black powder obtained by separating only the positive electrode from the used battery and crushing it.

The black mass may include valuable metals derived from the positive electrode active material other than lithium and metals such as aluminum (Al) derived from the positive electrode current collector. Specifically, the black mass may be derived from a positive electrode formed by a structure in which a positive electrode active layer including the positive electrode active material is formed on an aluminum foil positive electrode current collector. Accordingly, the black mass may include valuable metals such as nickel (Ni), cobalt (Co), manganese (Mn), and iron (Fe) along with lithium (Li), and aluminum (Al) within a predetermined concentration range.

Here, the positive electrode active material may include lithium nickel composite oxide such as LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, LiNi_{0.7}Mn_{1.3}O₄, LiNi_{0.5}Mn_{1.5}O₄, LiNi_{0.3}Mn_{1.7}O₄, etc., or lithium iron phosphate such as LiFePO₄, LiFe_{0.8}Mn_{0.2}PO₄, LiFe_{0.5}Mn_{0.5}PO₄, either alone or in combination, but is not limited thereto.

The black mass may contain 1 wt.% to 10 wt.% of lithium and 15 wt.% to 40 wt.% of valuable metals (i.e., Ni, Co, Mn) based on the total weight. Additionally, the black mass may include aluminum in an amount exceeding 0.5 wt.% based on the total weight, specifically 1 to 5 wt.%; 0.5 wt.% to 3 wt.%; 1 wt.% to 3 wt.%; 2 wt.% to 4 wt.%; 2.5 wt.% to 5 wt.%; or 2.5 wt.% to 4.5 wt.% aluminum. The remaining portion may consist of negative electrode active materials such as graphite or silicon that form the negative electrode of a lithium-ion battery, metals such as copper that form the negative electrode current collector, and organic materials that form the separator.

The black mass may be adjusted to have an average particle diameter within a specified range. Specifically, the black mass may have an average particle diameter (D₅₀) of 0.5 µm to 1,000 µm, and more specifically, 0.5 µm to 750 µm; 0.5 µm to 500 µm; 0.5 µm to 250 µm; 0.5 µm to 100 µm; 0.5 µm to 50 µm; 0.5 µm to 20 µm; 0.5 µm to 10 µm; 1 µm to 15 µm; 5 µm to 15 µm; 10 µm to 200 µm; 50 µm to 500 µm; 100 µm to 300 µm; 400 µm to 700 µm; 500 µm to 900 µm; 50 µm to 150 µm; or may have an average particle diameter (D₅₀) of 5 µm to 80 µm.

When the average particle diameter of the black mass is smaller than the lower limit of the aforementioned range, agglomeration of black mass may occur, preventing the chlorination reaction of aluminum present in the agglomerated black mass from proceeding smoothly. Additionally, if the average particle diameter of the black mass is greater than the upper limit of the aforementioned range, chlorine may have difficulty penetrating into the interior of the black mass particles, resulting in reduced aluminum removal efficiency.

Meanwhile, the chlorine-based compound precursors refer to compounds that can provide chlorine-based compounds under high-temperature conditions. The chlorine-based compounds may include hydrocarbon compounds that vaporize and increase their molecular internal energy, thereby activating chlorine atoms, or chlorine (Cl₂) gas and/or hydrogen chloride (HCl). The chlorine-based compound precursors may be substances that are liquid or solid at room temperature (e.g., 18 to 25°C) and are used to ensure safety and processability during reactions with black mass.

Specifically, the chlorine-based compound precursor may include at least one of C₁₋₆ hydrocarbon compound in which at least one hydrogen atom is substituted with a chlorine atom; and polymer compound in which at least one hydrogen atom is substituted with a chlorine atom.

The above-mentioned hydrocarbon compounds may be compounds in which one or more hydrogen atoms are substituted with chlorine (-Cl) in hydrocarbon compounds having a carbon number of 1 to 6, such as methane (carbon number: 1), ethane (carbon number: 2), and propane (carbon number: 3). For example, the hydrocarbon compounds may include at least one of tetrachloromethane (CCl₄), chloroform (CHCl₃), dichloromethane (CH₂Cl₂), hexachloroethane (C₂Cl₆), tetrachloroethane (C₂H₂Cl₄), tetrachloroethylene (C₂Cl₄), trichloroethylene (C₂HCl₃), and the like. The hydrocarbon compounds may be in a liquid state at room temperature (approximately 20±5°C) and atmospheric pressure (approximately 1 atm).

The polymer compounds are high molecular weight compounds with a molecular weight of 1,000 g/mol or more, including hydrocarbon chains, wherein at least one hydrogen atom in the hydrocarbon chains is substituted with a chlorine atom. For example, the polymer compounds may include polyvinyl chloride (PVC) and the like. The polymer compounds may be in a solid state at room temperature (approximately 20±5°C) and atmospheric pressure (approximately 1 atm).

In addition, materials that are considered suitable as chlorine-based compound precursors include chlorine (Cl₂) gas, hydrogen chloride (HCl) gas, and other gases; dilute hydrochloric acid and other inorganic solvents; metal salts such as lithium chloride (LiCl), sodium chloride (NaCl), potassium chloride (KCl), calcium chloride (CaCl₂), and etc.

However, gases such as chlorine gas (Cl₂) and hydrogen chloride (HCl) have the characteristic of having low reactivity with aluminum in black mass at low temperatures. Additionally, these gases are difficult to control during the process and have high toxicity to humans, resulting in low safety, making them unsuitable as chlorine-based compounds precursors.

Furthermore, inorganic solvents such as dilute hydrochloric acid contain water (H₂O). This water reacts with aluminum (Al) in the black mass before it can react with chlorine (Cl) in chlorine-based compounds, forming aluminum oxide (Al₂O₃). Aluminum oxide undergoes a phase change to a gas at approximately 2977°C, making it difficult to remove aluminum through volatilization. This requires an additional purification process to remove it, presenting a significant challenge.

In addition, metal salts containing chlorine undergo a phase change to a gaseous state at temperatures above approximately 600°C, thereby supplying chlorine. This poses a limitation in that high energy and costs are required to supply chlorine from chlorine-based compound precursors during the process. Furthermore, the metal salts have low reactivity with aluminum (Al) in the black mass and the supplied chlorine (Cl) compounds, making it difficult to form aluminum chloride (AlCl₃).

On the other hand, hydrocarbon compounds and/or polymer compounds with a chemical structure where chlorine is substituted in the chain-shaped hydrocarbon group are easier to control during the process and have low toxicity to the human body, making them safer. Additionally, the hydrocarbon compounds undergo a phase change to a gaseous state at temperatures of 200°C or lower, thereby readily supplying chlorine atoms with increased reactivity within the molecules to the black mass. The polymer compounds, on the other hand, undergo thermal decomposition at approximately 240 to 270°C to provide chlorine (Cl₂) and/or hydrogen chloride (HCl) in gaseous form. Therefore, the hydrocarbon compounds and/or polymer compounds have the characteristic of efficiently providing vaporized hydrocarbon compounds containing chlorine-based compounds or chlorine (Cl₂) and/or hydrogen chloride (HCl) in a gaseous state. The chlorine-based compounds provided in this manner have a high reactivity with aluminum (Al) in the black mass, rapidly generating aluminum chloride (AlCl₃), thereby offering the advantage of excellent aluminum (Al) removal efficiency from the black mass.

The chlorine-based compound precursor may be tetrachloromethane (CCl₄). Tetrachloromethane (CCl₄) has a Gibbs free energy of conversion to aluminum chloride (AlCl₃) when reacting with aluminum; the Gibbs free energy for converting aluminum oxide (Al₂O₃), which may be produced as a byproduct, into aluminum chloride (AlCl₃) is significantly lower, resulting in a negative value. This provides a significant advantage for the chlorination reaction of aluminum.

Additionally, the chlorine-based compound precursor may be polyvinyl chloride (PVC). PVC has the characteristics of high human safety and process safety. Furthermore, PVC is solid at room temperature, making it easy to store and manage the material. Furthermore, the polyvinyl chloride (PVC) has the advantage of enabling quantitative production of hydrogen chloride (HCl) in gaseous form through thermal decomposition, thereby facilitating process control.

Additionally, in this step (S1), the black mass and chlorine-based compound precursor can be mixed so that the aluminum (Al) atoms contained in the black mass and the chlorine (Cl) atoms contained in the chlorine-based compound precursor have a certain atomic ratio. Specifically, aluminum chloride (AlCl₃) has a structure where one aluminum atom is bonded to three chlorine atoms. Therefore, the chlorine-based compound precursor can be mixed such that the ratio of chlorine atoms to aluminum atoms (Cl/Al) is 3 or greater, and more specifically, can be mixed such that the ratio is between 3 and 100. For example, the chlorine-based compound precursor can be mixed such that the ratio of chlorine atoms contained in the chlorine-based compound precursor to aluminum atoms contained in the black mass (Cl/Al) is 3 to 80; 3 to 60; 3 to 50; 3 to 30; 3 to 10; 10 to 80; 20 to 70; 30 to 60; 40 to 90; 50 to 100; 50 to 90; 70 to 99; 20 to 30; 30 to 55; 40 to 50; 45 to 55; 20 to 50; or 60 to 80.

For example, when the chlorine-based compound precursor is a hydrocarbon compound, the chlorine-based compound precursor can be mixed so that the ratio (Cl/Al) of chlorine atoms contained in the chlorine-based compound precursor to aluminum atoms contained in the black mass is 36 to 53.

When the chlorine-based compound precursor is a polymer compound, the chlorine-based compound precursor can be mixed such that the ratio (Cl/Al) of chlorine atoms contained in the chlorine-based compound precursor to aluminum atoms contained in the black mass is 21 to 30; 47 to 53; or 90 to 99.

The present disclosure enables the chlorination of aluminum in black mass to be performed efficiently and economically without excessive use of chlorine-based compound precursors by ensuring that the mixture of black mass and chlorine-based compound precursors satisfies the aforementioned atomic ratio range. Specifically, if the ratio of chlorine atoms to aluminum atoms (Cl/Al) is lower than the lower limit of the aforementioned atomic ratio range, the chlorination of aluminum in the black mass is insufficient, resulting in a significant reduction in aluminum removal efficiency. Additionally, if the ratio of chlorine atoms to aluminum atoms (Cl/Al) exceeds the upper limit of the aforementioned atomic ratio range, the chlorination of aluminum in the black mass proceeds with high reactivity, but the pressure of chlorine-based compounds may increase excessively. High-pressure chlorine-based compounds can reduce process safety and cause corrosion inside the reactor. Furthermore, there is a limitation in terms of economic viability due to the excessive use of chlorine-based compound precursors.

The mixture of black mass and chlorine-based compound precursors does not contain any components other than black mass and chlorine-based compound precursors; however, if the chlorine-based compound precursor is a hydrocarbon compound, it may additionally contain a catalyst to promote the reaction between aluminum and chlorine.

The catalyst may be an aluminum-based catalyst, specifically aluminum chloride (AlCl₃). The aluminum chloride (AlCl₃) reacts with the aluminum (Al) contained in the black mass to produce AlCl and/or AlCl₂. The AlCl and/or AlCl₂ thus generated can rapidly react with chlorine-based compounds produced from chlorine-based compound precursors to generate AlCl₃. In other words, the aluminum chloride (AlCl₃) can induce the oxidation of aluminum (Al) present in the black mass, thereby promoting the chlorination of aluminum.

For this purpose, the aluminum-based catalyst may be included in an amount of 0.001 wt.% to 5 wt.% based on the total weight of the mixture containing black mass and chlorine-based compound precursors, specifically 0.001 wt.% to 3 wt.%; 0.001 wt.% to 2 wt.%; 0.001 wt.% to 1 wt.%; 0.001 wt.% to 0.5 wt.%; or 0.1 wt.% to 0.5 wt.%. When the aluminum-based catalyst is included in an amount less than the lower limit of the aforementioned concentration range, the effect of promoting the chlorination of aluminum may be minimal. Additionally, if the aluminum-based catalyst is included in an amount exceeding the upper limit of the aforementioned concentration range, it may react with the ceramic or glass materials constituting the reactor to generate silicon tetrachloride (SiCl₄) and aluminum silicate (Al₂SiO₅) or corrode the interior of the reactor, thereby requiring an additional purification process for black mass.

Next, the aluminum removal method of the present disclosure includes a step (S2) of heat treating the formed mixture to generate dealuminated black mass and aluminum chloride gas.

This step (S2) refers to the process of inducing a reaction between chlorine atoms (Cl) from activated chlorine-based compounds, which are vaporized and/or thermally decomposed under high-temperature conditions, and aluminum (Al) present in the black mass to form aluminum chloride (AlCl₃).

As an example, when a chlorine-based compound precursor is a hydrocarbon compound, heat treatment causes the chlorine-based compound precursor to vaporize, generating chlorine atoms that react with the activated hydrocarbon compounds to form chlorine-based compounds, and the activated chlorine atoms in the hydrocarbon compounds react with aluminum (Al) present in the black mass in a solid state to form aluminum chloride (AlCl₃).

In another example, when the chlorine-based compound precursor is a polymer compound, heat treatment causes the chlorine-based compound precursor to thermally decompose, generating chlorine (Cl₂) and/or hydrogen chloride (HCl) in gaseous form, and the activated chlorine atoms from the generated chlorine (Cl₂) and/or hydrogen chloride (HCl) react with aluminum (Al) present in the black mass in solid form to form aluminum chloride (AlCl₃).

Here, the aluminum chloride (AlCl₃) formed is in a gaseous state due to the applied heat, allowing the aluminum to be selectively removed from the solid black mass, resulting in dealuminated black mass.

In this step (S2), the temperature can be controlled to satisfy a predetermined range during heat treatment to vaporize and/or thermally decompose the chlorine-based compound precursors. Specifically, the heat treatment in this step (S2) can be performed at temperatures above the temperature at which chlorine-based compound precursors vaporize or thermally decompose to produce chlorine-based compounds, and within a temperature range below 300°C. More specifically, the temperature range can be 35°C to 290°C; 35°C to 220°C; 35°C to 190°C; 35°C to 150°C; 50°C to 260°C; 50°C to 180°C; 50°C to 150°C; 50°C to 120°C; 50°C to 90°C; 100°C to 270°C; 100°C to 200°C; 120°C to 200°C; 130°C to 190°C; 150°C to 280°C; 180°C to 280°C; 200°C to 280°C; 240°C to 290°C or 240°C to 260°C.

As an example, during the heat treatment, the temperature can be controlled to be above the boiling point (b.p) of the hydrocarbon compounds, i.e., approximately 35°C to 280°C or approximately 35°C to 200°C, in order to vaporize the hydrocarbon compounds when the chlorine-based compound precursors are hydrocarbon compounds. Here, the boiling points of the hydrocarbon compounds are as follows: Tetrachloromethane (CCl₄) approximately 76-77°C; Chloroform (CHCl₃) approximately 61-62°C; Dichloromethane (CH₂Cl₂) approximately 39-40°C; Hexachloroethane (C₂Cl₆) approximately 184-188°C; Tetrachloroethane (C₂H₂Cl₄) approximately 146-147°C; Tetrachloroethylene (C₂Cl₄) approximately 120-122°C; Trichloroethylene (C₂HCl₃) approximately 87-88°C.

As another example, during the heat treatment, the temperature may be adjusted to approximately 240°C or higher but less than 300°C to facilitate the thermal decomposition of the polymer compound (e.g., polyvinyl chloride) when the chlorine-based compound precursor is a polymer compound, and specifically, the temperature may be adjusted to approximately 250°C to 280°C.

Additionally, the heat treatment can be performed in a closed system reactor, such as an autoclave, which can apply heat to the reactants and maintain the internal pressure increased by the applied heat. A closed-system reactor can increase the reactivity of reactants by maintaining the increased vapor pressure of reactants or the increased pressure caused by the heat-generated products during heat treatment, as seen in solvent-thermal reactions. In other words, the present disclosure can promote the chlorination reaction of aluminum in black mass by maintaining the internal pressure increased due to the chlorine-based compounds generated from the chlorine-based compound precursors through heat treatment in a closed-system reactor.

Accordingly, the heat treatment of the present disclosure can be performed under predetermined pressure conditions. Specifically, the heat treatment can be performed at a pressure of greater than 1.0 bar and 15 bar or less, and more specifically, 1.1 bar to 15 bar; 1.1 bar to 12 bar; 1.1 bar to 10 bar; 1.1 bar to 7.5 bar; 1.1 bar to 5 bar; 1.5 bar to 7.0 bar; 1.5 bar to 3.5 bar; 2.0 bar to 3.0 bar; 3.0 bar to 9.0 bar; 4.0 bar to 8.0 bar; 5.0 bar to 10 bar; 8.0 bar to 12 bar; or 11 bar to 15 bar.

During heat treatment, if the internal pressure of the reactor falls below the lower limit of the aforementioned range, the effect of promoting the chlorination reaction of aluminum in the black mass is minimal, resulting in a low aluminum removal rate. Additionally, during heat treatment, if the internal pressure of the reactor exceeds the upper limit of the aforementioned range, the reactor may be damaged during the reaction, posing a safety risk and limiting the safety of the process.

Furthermore, the heat treatment can be performed for 10 hours to 50 hours. More specifically, the heat treatment can be performed for 10 hours to 40 hours; 10 hours to 30 hours; 15 hours to 40 hours; 15 hours to 30 hours; or 20 hours to 25 hours. If the heat treatment is performed for a duration shorter than the lower limit of the time range, insufficient time is provided for aluminum in the black mass to convert into aluminum chloride, resulting in a low aluminum removal rate. Additionally, even if the heat treatment is performed for a longer duration than the upper limit of the time range, it is difficult to achieve improved aluminum removal efficiency or other beneficial effects, resulting in reduced process efficiency and economic viability.

Furthermore, the heat treatment can be performed under conditions where moisture (H₂O) or oxygen (O₂) is excluded from the reaction interior. Specifically, in this step (S2), after introducing black mass and chlorine-based compound precursors into the reactor, a vacuum state is formed inside the reactor to remove moisture (H₂O) or oxygen (O₂) present within the reactor. Then, by injecting inert gases such as helium (He), neon (Ne), nitrogen (N₂), or argon (Ar) into the reactor, the internal pressure of the reactor can be controlled to 1 bar prior to heat treatment.

Aluminum chloride (AlCl₃) is highly reactive and easily forms aluminum chloride hydrate (AlCl₃·6H₂O) when it comes into contact with moisture or oxygen in the air. The aluminum chloride hydrate (AlCl₃·6H₂O) converts to aluminum oxide (Al₂O₃) at high temperatures, making it difficult to remove aluminum from the black mass. Therefore, the present disclosure minimizes the formation of aluminum oxide (Al₂O₃) during heat treatment by removing moisture and oxygen present inside the reactor prior to heat treatment, thereby improving the aluminum removal efficiency from the black mass.

The reactor used in the present disclosure may be limited in the materials used to configure its interior. Specifically, the reactor may be configured from ceramic materials, glass materials, or stainless steel materials, and the interior of the reactor may be coated with fluorine-based resins such as polytetrafluoroethylene (PTFE) for purposes such as heat resistance and chemical resistance.

Meanwhile, the aluminum removal method according to the present disclosure may further include the steps of: after generating dealuminated black mass and aluminum chloride gas as shown in FIG. 2 (S2), separating aluminum chloride gas from the dealuminated black mass (S3); and condensing the separated aluminum chloride gas (S4).

Specifically, the aluminum removal method involves heat treating a mixture of black mass and chlorine-based compound precursors for a predetermined time to produce solid-state dealuminated black mass and gaseous aluminum chloride (S2). Then, while maintaining the heat treatment temperature for 0.5 to 2 hours, the valve of the pipe separately introduced into the reactor can be opened to depressurize the inside of the reactor to approximately 10⁻¹ torr. The gaseous aluminum chloride generated inside the reactor can be separately separated (S3). Here, the predetermined time may be the same as the heat treatment time performed earlier. The separated aluminum chloride is collected and cooled to a temperature below 150°C, preferably to room temperature (18-25°C), to condense (S4).

The black mass obtained through the above process may be a dealuminated black mass with a significantly reduced aluminum content, as aluminum has been selectively removed. Specifically, the aluminum removal method according to the present disclosure can remove aluminum from the black mass with high efficiency, and the aluminum removal efficiency may be 40% or higher. Specifically, the aluminum removal method may achieve an aluminum removal efficiency of 50% or higher, 60% or more, 70% or more, 80% or more, 90% or more, 50% to 99%, 60% to 95%, 50% to 80%, 55% to 75%, 60% to 70%, 80% to 99%, or 70% to 90% aluminum removal efficiency.

Accordingly, the aluminum-removed black mass, i.e., the dealuminated black mass, produced according to the present disclosure may have a significantly reduced aluminum content in the black mass. Here, the aluminum content in the dealuminated black mass may vary depending on the ratio of aluminum contained in the black mass before dealuminization.

As an example, black mass containing 3 wt.% to 4 wt.% aluminum prior to aluminum removal may have an aluminum content of 3 wt.% or less based on the total weight after performing the aluminum removal method according to the present disclosure, specifically 0.1 wt.% to 2.5 wt.%, 0.1 wt.% to 2.0 wt.%, 0.1 wt.% to 1.7 wt.%, 0.1 wt.% to 1.5 wt.%, 0.1 wt.% to 1.3 wt.%, 0.5 wt.% to 2.4 wt.%, 0.5 wt.% to 1.9 wt.%, 1.5 wt.% to 2.8 wt.%, or 1.1 wt.% to 2.7 wt.%.

The aluminum removal method according to the present disclosure, having the configuration, selectively removes aluminum (Al) contained in black mass derived from waste batteries by heat treating it with a chlorine-based compound precursor, thereby enabling the recovery of lithium (Li) from the black mass with high purity and recovery rate. Additionally, the aluminum removal method has the advantages of easy process control and high safety.

The present disclosure will be described in more detail below with reference to examples and experimental examples.

However, the following examples and experimental examples are merely illustrative of the present disclosure and are not intended to limit the scope of the present disclosure.

### Examples 1 to 11 and Comparative Examples 1 to 4. Removal of aluminum from black mass

An inactive lithium secondary battery cell provided with: a positive electrode in which a positive electrode active layer including LiNi₁/₃Co₁/₃Mn₁/₃O₂ as the positive electrode active material is formed on an aluminum foil; and a negative electrode in which a negative electrode active layer including graphite as the negative electrode active material is formed on a copper foil was prepared.

The prepared lithium secondary battery cell was crushed to obtain a black mass with an average particle diameter (D₅₀) of 8 µm to 12 µm. At this point, inductively coupled plasma mass spectrometry (ICP-MS) was performed on the obtained black mass to measure the content of metal components contained in the black mass per 1 kg of black mass. The results are shown in Table 1 below.

**[Table 1]**

| Metal component | Content |
|---|---|
| Li | 36.7 g |
| Ni | 93.9 g |
| Co | 84.4 g |
| Mn | 88.2 g |
| Al | 37.7 g |
| Cu | 20.2 g |
| Mg | 0.63 g |
| Ca | 0.21 g |
| Zn | 0.35 g |
| Fe | 2.5 g |
| Na | 0.74 g |

As precursors of chlorine-based compounds, the following hydrocarbon compounds in liquid form: ① tetrachloromethane (CCl₄), ② chloroform (CHCl₃), ③ dichloromethane (CH₂Cl₂), ④ trichloroethylene (C₂HCl₃), and ⑤ tetrachloroethylene (C₂Cl₄); the polymer compound ⑥ polyvinyl chloride (PVC) in solid form; and the gases ⑦ hydrogen chloride (HCl) gas and ⑧ chlorine (Cl₂) gas were each prepared. Additionally, aluminum chloride (AlCl₃ (anhydrous), purity: 98.0%) was prepared as a catalyst.

Furthermore, as a reactor, ⓐ an autoclave made of ceramic material coated with polytetrafluoroethylene (PTFE) on the inside, and ⓑ an aluminum crucible that does not maintain internal pressure during heat treatment were prepared.

The prepared black mass was introduced into a reactor (capacity: 250 mL), and a chlorine-based compound precursor was injected to adjust the ratio (Cl/Al) of chlorine (Cl) atoms to aluminum (Al) atoms in the black mass to the values shown in Table 2. The reactor was then sealed.

A vacuum was formed inside the sealed reactor to remove moisture (H₂O) and oxygen (O₂) present inside the reactor, and aluminum chloride (AlCl₃) was added to make up 0.2 wt % of the total mixture. Nitrogen (N₂) gas was injected into the reactor to adjust the internal pressure to 1 bar. Here, if the chlorine-based compound precursor is ⑦ hydrogen chloride (HCl) gas or ⑧ chlorine (Cl₂) gas, only the black mass is introduced into the reactor, and the moisture and oxygen inside the reactor are replaced with hydrogen chloride (HCl) gas or chlorine (Cl₂) gas to adjust the internal pressure of the reactor to 1 bar.

After that, the reactor was heated to the reaction temperature shown in Table 2, and the mixture of black mass and chlorine-based compound precursors was heat treated for 24 hours from the time the reaction temperature was reached.

After 24 hours, the reactor was depressurized to 10⁻¹ torr while maintaining the reaction temperature for 1 hour to collect the gas inside the reactor. The collected gas was cooled to room temperature (18-25°C) to obtain the condensate, and the reactor was opened to obtain the black mass with the reaction completed.

X-ray diffraction (XRD) analysis and inductively coupled plasma mass spectrometry (ICP-MS) were performed on the collected condensate and black mass to determine the aluminum components and their contents remaining in the condensate and black mass, and the results are shown in Table 3 below.

**[Table 2]**

| | Types of chlorine-based compound precursor | Cl/Al | Whether catalyst was added | Type of reactor | Reaction temperature |
|---|---|---|---|---|---|
| Example 1 | CCl₄ (l) | 45.5 | O | ⓐ | 160°C |
| Example 2 | CHCl₃ (l) | 38.2 | O | ⓐ | 160°C |
| Example 3 | CH₂Cl₂ (l) | 48.3 | O | ⓐ | 160°C |
| Example 4 | C₂HCl₃ (l) | 49.5 | O | ⓐ | 160°C |
| Example 5 | C₂Cl₄ (l) | 49.8 | O | ⓐ | 160°C |
| Example 6 | PVC (s) | 50.3 | X | ⓐ | 250°C |
| Example 7 | PVC (s) | 98.5 | X | ⓐ | 250°C |
| Example 8 | PVC (s) | 24.7 | X | ⓐ | 250°C |
| Example 9 | C₂HCl₃ (l) | 49.5 | X | ⓐ | 160°C |
| Example 10 | C₂HCl₃ (l) | 2.1 | O | ⓑ | 160°C |
| Example 11 | C₂HCl₃ (l) | 49.5 | O | ⓐ | 160°C |
| Comparative Example 1 | C₂HCl₃ (l) | 49.5 | O | ⓐ | 80°C |
| Comparative Example 2 | PVC (s) | 75.3 | X | ⓐ | 160°C |
| Comparative Example 3 | HCl (g) | 5.0 | X | ⓐ | 200°C |
| Comparative Example 4 | Cl₂ (g) | 5.0 | X | ⓐ | 200°C |

**[Table 3]**

| | Location where aluminum was detected | Types of aluminum components | | Aluminum content remaining in black mass |
|---|---|---|---|---|
| | | Condensate | Black mass | |
| Example 1 | Condensate + Black mass | AlCl₃ | Al | 1.26 wt.% |
| Example 2 | Condensate + Black mass | AlCl₃ | Al | 1.55 wt.% |
| Example 3 | Condensate + Black | AlCl₃ | Al | 1.37 wt.% |
| | mass | | | |
| Example 4 | Condensate + Black mass | AlCl₃ | Al | 1.41 wt.% |
| Example 5 | Condensate + Black mass | AlCl₃ | Al | 1.47 wt.% |
| Example 6 | Condensate + Black mass | AlCl₃ | Al | 1.16 wt.% |
| Example 7 | Condensate + Black mass | AlCl₃ | Al | 0.78 wt.% |
| Example 8 | Condensate + Black mass | AlCl₃ | Al | 2.35 wt.% |
| Example 9 | Condensate + Black mass | AlCl₃ | Al | 2.26 wt.% |
| Example 10 | Black mass | - | Al | 3.71 wt.% |
| Example 11 | Black mass | - | Al | 3.73 wt.% |
| Comparative Example 1 | Black mass | - | Al | 3.58 wt.% |
| Comparative Example 2 | Black mass | - | Al | 3.67 wt.% |
| Comparative Example 3 | Black mass | - | Al | 3.71 wt.% |
| Comparative Example 4 | Black mass | - | Al | 3.52 wt.% |

As shown in Table 3, the aluminum removal method according to the present disclosure is effective in removing aluminum present in black mass.

Specifically, when the mixture of black mass and chlorine-based compound precursors is subjected to heat treatment at a temperature where the chlorine-based compound precursors vaporize or decompose thermally to generate chlorine (Cl) compounds, the aluminum (Al) in the black mass is converted to aluminum chloride (AlCl₃) and volatilizes, resulting in an aluminum removal rate of 50% or more.

On the other hand, in Comparative Examples 1 and 2, where the mixture of black mass and chlorine-based compound precursors was heat treated at temperatures below the temperature where the chlorine-based compound precursors vaporize or undergo thermal decomposition to produce chlorine (Cl) compounds, and in Comparative Examples 3 and 4, where hydrogen chloride gas or chlorine gas was used as the chlorine-based compound precursor, the chlorination of aluminum in the black mass was insufficient, resulting in the aluminum being almost completely not removed.

From these results, it can be concluded that the aluminum removal method according to the present disclosure enables selective removal of aluminum (Al) from black mass derived from waste batteries by heat treating it with chlorine-based compound precursors under specified temperature conditions, thereby allowing lithium (Li) to be obtained with high purity and recovery rates.

The above description has been provided with reference to preferred embodiments of the present disclosure; however, those skilled in the art or those with ordinary knowledge in the field will understand that the present disclosure may be variously modified and changed within the scope of the technical field of the present disclosure as described in the appended claims without departing from the scope of the present disclosure.

Therefore, the technical scope of the present disclosure is not limited to the contents described in the detailed description of the specification, but should be determined by the scope of the claims.

## Claims

1. A method for removing aluminum from black mass derived from a deactivated battery, comprising:
forming a mixture comprising black mass and chlorine-based compound precursor (S1); and
heat treating the formed mixture to generate dealuminated black mass and aluminum chloride gas (S2),
wherein the heat treatment is performed at a temperature above the temperature at which the chlorine-based compound precursors vaporize or thermally decompose to generate chlorine compounds; and below 300°C.

2. The method for removing aluminum of claim 1, wherein the chlorine-based compound precursors comprise at least one of C₁₋₆ hydrocarbon compound in which at least one hydrogen atom is substituted by a chlorine atom, and polymer compound in which at least one hydrogen atom is substituted by a chlorine atom.

3. The method for removing aluminum of claim 2, wherein the hydrocarbon compound comprises one or more among tetrachloromethane (CCl₄), chloroform (CHCl₃), dichloromethane (CH₂Cl₂), hexachloroethane (C₂Cl₆), tetrachloroethane (C₂H₂Cl₄), tetrachloroethylene (C₂Cl₄), and trichloroethylene (C₂HCl₃).

4. The method for removing aluminum of claim 2, wherein the polymer compound comprises polyvinyl chloride (PVC).

5. The method for removing aluminum of claim 1, wherein the heat treatment is performed in a reactor capable of maintaining the internal pressure that increases during heat treatment.

6. The method for removing aluminum of claim 1, wherein the heat treatment is performed at a pressure of more than 1 bar and 15 bar or less.

7. The method for removing aluminum of claim 1, wherein the mixture further comprises an aluminum-based catalyst comprising aluminum chloride (AlCl₃).

8. The method for removing aluminum of claim 1, wherein the average particle diameter of the black mass is 0.5 µm to 1,000 µm.

9. The method for removing aluminum of claim 1, wherein the black mass comprises aluminum in an amount of greater than 0.5 wt.% and 5 wt.% or less with respect to the total weight.

10. The method for removing aluminum of claim 1, wherein
the chlorine-based compound precursor is mixed with the black mass such that the ratio of chlorine atoms in the chlorine-based compound precursor to aluminum atoms in the black mass (Cl/Al) is 3 to 100.

11. The method for removing aluminum of claim 1, wherein the heat treatment of the black mass and the chlorine-based compound precursor is performed for 10 hours to 50 hours.

12. The method for removing aluminum of claim 1, wherein the method for removing aluminum further comprises:
after generating dealuminated black mass and aluminum chloride gas (S2),
separating aluminum chloride gas from the dealuminated black mass (S3); and
condensing the separated aluminum chloride gas (S4).

13. The method for removing aluminum of claim 1, wherein the dealuminated black mass has an aluminum element content of 3 wt.% or less with respect to the total weight
